**Europäisches Patentamt**

**European Patent Office**

**Office européen des brevets**

(19)

(11) Veröffentlichungsnummer: **0 465 704 B1**

(12)

# EUROPÄISCHE PATENTSCHRIFT

(45) Veröffentlichungstag der Patentschrift: **01.03.95**

(21) Anmeldenummer: **90113252.2**

(22) Anmeldetag: **11.07.90**

(51) Int. Cl.⁶: **B41B 25/00**, B41B 19/00, B41B 23/00, G06K 15/02

Die Akte enthält technische Angaben, die nach dem Eingang der Anmeldung eingereicht wurden und die nicht in dieser Patentschrift enthalten sind.

(54) **Verfahren zur Zurichtung von Schriften.**

(43) Veröffentlichungstag der Anmeldung:
**15.01.92 Patentblatt 92/03**

(45) Bekanntmachung des Hinweises auf die Patenterteilung:
**01.03.95 Patentblatt 95/09**

(84) Benannte Vertragsstaaten:
**DE FR GB**

(56) Entgegenhaltungen:
US-A- 3 712 443
US-A- 4 090 187

IBM TECHNICAL DISCLOSURE BULLETIN, Band 28, Nr. 9, Februar 1986, Seiten 4081-4082, Armonk, NY, US; "Selective page-edge control for pseudo-kerned typefonts"

(73) Patentinhaber: **URW Software & Type GmbH**
**Harksheider Strasse 102**
**D-22399 Hamburg (DE)**

(72) Erfinder: **Karow, Peter**
**Kreienkoppel 55**
**D-2000 Hamburg 65 (DE)**
Erfinder: **Kämmle, Bodo**
**Winsener Strasse 18**
**D-2359 Kisdorf (DE)**
Erfinder: **Albrecht, Margret**
**Kätnerweg 13 g**
**D-2000 Hamburg 65 (DE)**

(74) Vertreter: **UEXKÜLL & STOLBERG Patentan-**
**wälte**
**Beselerstrasse 4**
**D-22607 Hamburg (DE)**

## Beschreibung

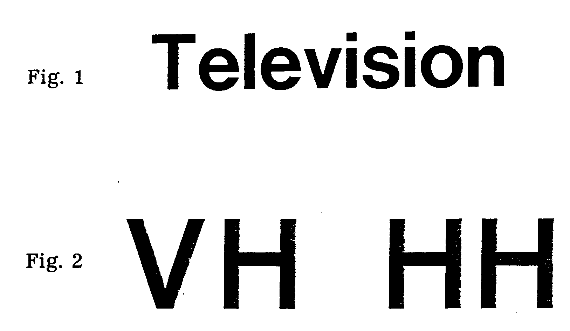

Beim traditionellen Zurichten einer Schrift, d.h. der Festlegung der Abstände zwischen den Zeichen eines Wortes, ergibt sich dieser Abstand als Summe der Nach- und Vorbreite zweier aufeinanderfolgender Zeichen, die auch beim elektronischen Setzen ebenso unveränderlich festliegen wie beim Letterndruck. Diese traditionelle Zurichtung wird auch heute noch in sehr großem Umfang angewendet, weil sie vor allem bei kleineren Schriftgrößen bis etwa 8 p mit geringstem Aufwand ein recht gutes Schriftbild liefert. Figur 1 zeigt ein Beispielwort gesetzt mit einer solchen traditionellen Zurichtung.

Bei größeren Schriftgrößen fallen aber Ungleichmäßigkeiten der Freiräume bei manchen Zeichenpaaren wie z.B. Te (richtig wäre Te) oder AV (richtig wäre AV) unangenehm auf, weil dort das Wort in zwei Teile zerfällt. Häufig werden deshalb für solche Zeichenpaare Korrekturwerte ermittelt und in einer sogenannten Ästhetiktabelle gespeichert. Diese meist negativen Korrekturwerte werden zu dem sich aus Nach- plus Vorbreite ergebenden traditionellen Zeichenabstand hinzugefügt. Die oft mehr als 300 Zeichenpaare umfassenden Korrekturtabellen müssen vom Designer für jede Schrift (im Sinne von typeface) gesondert ermittelt werden, was üblicherweise etwa 5 Stunden Arbeitszeit je Typeface erfordert.

Es kommt auch - vor allem bei besonders großen Schriftgrößen wie auch bei besonders hohen Anforderungen an die Qualität des Schriftbildes - vor, daß nicht nur für bestimmte, sondern für alle bei der fraglichen Schrift überhaupt möglichen Zeichenpaare solche Korrekturwerte ermittelt und gespeichert werden, obwohl viele dieser Werte nicht sehr von Null verschieden sind. Damit wird dem Benutzer der Tabelle die Notwendigkeit erspart, im Zweifelsfall nachzusehen, ob für ein bestimmtes Zeichenpaar überhaupt ein solcher Korrekturwert gespeichert ist und dem Designer das Kopfzerbrechen, ob sich der für die Ermittlung notwendige Arbeitsaufwand desselben rechtfertigen läßt.

Solche vollständigen Korrekturtabellen heißen nach einem Vorschlag von Dr. Peter Karow[*] "long Kerningtabellen" im Gegensatz zu den nur ausgewählte Zeichenpaare berücksichtigenden Ästhetiktabellen.

Um die Ermittlung der Kerningtabelle wenigstens halbautomatisch bewältigen zu können, muß ein Programm vor allem imstande sein, die Buchstabenform zu analysieren und danach die Korrekturwerte zu ermitteln, wobei üblicherweise verschiedene z.T. einander widersprechende Anforderungen an die Zurichtung gestellt werden. Die wichtigsten Anforderungen sind:

1. Die Weißfläche zwischen den Zeichen soll überall optisch gleich groß wirken, was weder bei gleich großen Abständen zwischen den Zeichen noch bei mathematisch gleich großen Weißflächen zwischen den Buchstabenkonturen der Fall ist.

2. Andererseits muß bei den meisten Kombinationen vermieden werden, daß zwei Zeichen optisch zu einem Zeichen zusammenwachsen, wenn auch bei Paaren, die auch als Ligaturen gesetzt werden, wie z.B. tt oder fl, das Zusammenwachsen ausnahmsweise erwünscht sein kann.

3. Außerdem sollen senkrechte und runde Zeichenelemente bzw. schwarze und weiße Flächen in einem bestimmten schriftspezifischen Rhythmus auftreten.

4. Bei Minuskeln ist nur der Abstand der Konturen im Bereich zwischen der Schriftlinie und der Minuskelhöhe von Bedeutung, bei Versalien der Abstand im Bereich zwischen der Schriftlinie und der Versalhöhe. Für Sonderzeichen gelten weitere spezielle Regeln.

5. Versalien untereinander sollen oft einen größeren Abstand als Minuskeln haben.

6. Einige Sonderzeichen müssen links und/oder rechts einen etwas größeren Abstand zu dem benachbarten Zeichen erhalten.

Ein Programm, das diesen Ansprüchen zumindest teilweise gerecht werden soll, muß mit einem umfangreichen Datensatz gesteuert werden. Ein Teil dieses Datensatzes muß bisher vom Designer für jede Schrift individuell zusammengestellt werden. Trotzdem ist auch dann das Ergebnis meist noch nicht ausreichend. Die Abstände einiger Zeichenpaare müssen in mehreren Korrekturläufen korrigiert werden. Nach jedem Bearbeitungsschritt werden etwa 10 Seiten Probetext ausgegeben, die der Designer auswertet und danach den nächsten Bearbeitungsschritt festlegt. Im Mittel erfordert die Erstellung einer kompletten long Kerningtabelle guter Qualität für jede Schrift auf diese Weise etwa 10 Arbeitsstunden.

Die vorliegende Erfindung betrifft ein Verfahren, das die Zurichtung sehr vieler verschiedener Schriften, wie z.B. aller lateinischen Schriften und solcher mit vergleichbarem Aufbau wie gotisch, griechisch oder cyrillisch auf vollautomatischem Wege innerhalb weniger Minuten mit einem allen praktisch vorkommenden Anforderungen genügenden Ergebnis ermöglicht. Erfindungsgemäß ist es daher nicht mehr notwendig, daß der Designer schriftspezifische Daten vorgibt und/oder Zwischenergebnisse von Probeläufen beurteilt und danach

---

[*] Peter Karow: Digital Formats for Typefaces, URW Verlag Seite 333

weitere Probeläufe programmiert.

Ein zusätzlicher besonderer Vorteil des erfindungsgemäßen Verfahrens besteht darin, daß es gestattet, während des Setzens innerhalb eines oder mehrerer Wörter die Schriftart zu wechseln, was bisher nicht mit guten Abständen möglich war. Erfindungsgemäß ist es dagegen möglich gute Abstände während des Setzens "on the fly" für das jeweilige Zeichenpaar zu berechnen, z.B. für Wörterbücher mit Phonetikzeichen und oder fremden Schriftarten wie cyrillisch oder Hebräisch.

Die Erfindung beruht auf der überraschenden Erkenntnis, daß es möglich ist, die für die Zurichtung relevanten schriftspezifischen Merkmale einer beliebigen Schrift einer großen Schriftfamilie, insbesondere aller lateinischen Schriften durch das Verbinden der sich aus Vor- und Nachbreite der Zeichen ergebenden traditionellen Zurichtung mit vollautomatisch berechneten Kerningwerten zu berücksichtigen, die in einer alle Zeichenpaare umfassenden Hilfstabelle zwischengespeichert werden. Damit ist es erstmals möglich, mit einem rein mathematischen Verfahren gute Zurichtungen zu erstellen, in denen für jedes Zeichenpaar ein ästhetisch optimaler Zeichenabstand definiert wird. Sowohl die Berechnung der Hilfstabelle wie auch die Berechnungen zur Verbindung mit der traditionellen Zurichtung können von einer elektronischen Rechenanlage in wenigen Minuten erledigt werden.

Das erfindungsgemäße Verfahren umfaßt daher die zwei Stufen 1) Erstellung der Hilfstabelle und 2) Berechnung zum Einbeziehen der traditionellen Zurichtung sowie vorzugsweise noch eine dritte Stufe zur Anpassung der erhaltenen Kerningwerte an die Laufweite der traditionellen Zurichtung. Diese dritte Stufe kann entfallen, wenn z.B. im Display-Bereich die in der zweiten Stufe erhaltene Laufweite bereits den Anforderungen des Anwendungsgebiets genügt und eine weitere Anpassung an die traditionelle Zurichtung nicht erforderlich ist. Das Verfahren ist nachstehend am Beispiel einiger Zeichen einer lateinischen Schrift näher erläutert.

1. Verfahrensstufe: Erstellung einer Hilfstabelle
In dieser Verfahrensstufe wird unter Verwendung eines für alle Schriften einer Schriftenfamilie (z.B. lateinisch, griechisch und cyrillisch) einheitlichen Datensatzes eine vorzugsweise sehr enge Hilfstabelle von Kerningwerten erstellt.

Der in dieser Verfahrensstufe zu berücksichtigende Datensatz enthält vorzugsweise die aus der Schrift vorgegebenen und aus ihr automatisch auslesbaren Daten.

$h_V$ Versalhöhe
$h_M$ Minuskelhöhe
$h_U$ Unterlänge
$h_S$ Serifenhöhe
$k_w$ Kursivwinkel der Schrift

Die Werte dieser Hilfstabelle haben nur den folgenden beiden Anforderungen zu genügen:

a) gewisse Mindestabstände zweier aufeinanderfolgender Zeichen, die gegebenenfalls auf den Grundlinien kleiner sein können als zwischen den Grundlinien, müssen eingehalten werden. Die Mindestabstände werden dabei vorzugsweise für normale Anwendungen gleich null gesetzt.

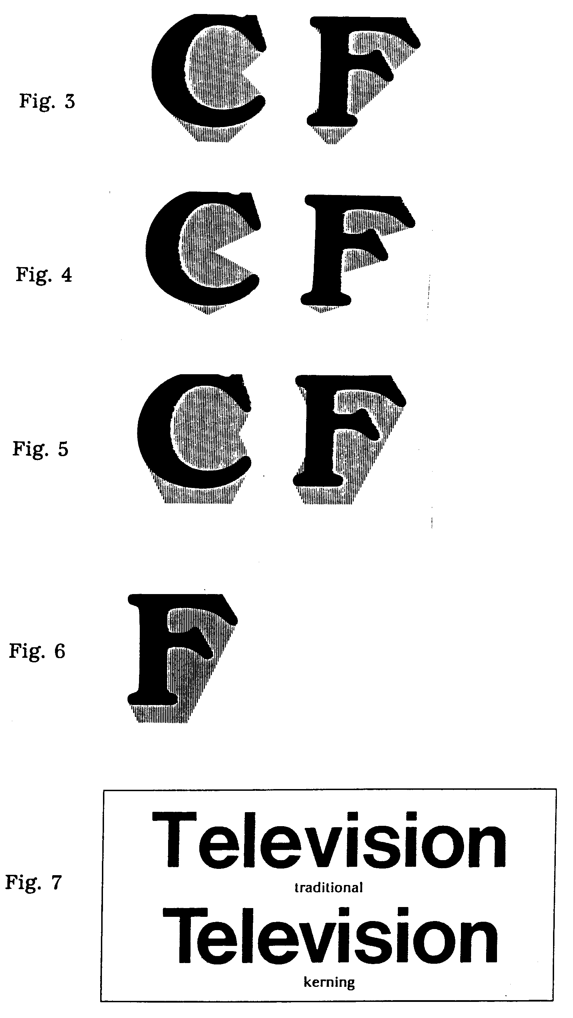

b) Die Weißfläche zwischen den Zeichen eines Paares in dem für das jeweilige Zeichenpaar relevanten Bereich soll bei allen Paaren jeweils einer Zeichenart optisch gleich groß erscheinen, soweit dies bei den vorgegebenen Mindestabständen möglich ist. Das heißt, daß die Weißfläche zwischen Versalien einerseits oder Minuskeln andererseits jeweils gleich groß erscheinen soll. Für Paare an denen Sonderzeichen beteiligt sind, gilt folgende Regel: Ein Sonderzeichen kann entweder links und/oder rechts oder gar keinen besonderen Abstand erhalten. In einer zusätzlichen Tabelle ist für jedes Zeichen zu speichern, ob es sich um ein Versalzeichen, ein Minuskelzeichen oder um ein Sonderzeichen handelt, im letzteren Fall welcher Art.
Der Forderung nach gleich groß wirkendem Abstand wäre zwar durch gleich großen Konturenabstand benachbarter Zeichen nicht Genüge getan, sie kann aber mit einer elektronischen Rechenanlage verhältnismäßig einfach erfüllt werden. Figur 2 zeigt, daß die Weißfläche zwischen V und H bei gleich großem Konturenabstand größer erscheint als im Zeichenpaar HH. Eine mathematisch gleichgroße Fläche zwischen den Buchstabenkonturen würde aber ebenfalls nicht zu optisch befriedigenden Ergebnissen führen. Beispielsweise wird beim C nur ein kleiner Teil der inneren Weißfläche beim Lesen dem Abstand zum folgenden Zeichen zugeordnet. Dieser Tatsache wird erfindungsgemäß dadurch Rechnung getragen, daß zur Berechnung der für die Zurichtung zu berücksichtigenden Weißfläche zwischen den Zeichen eines Paares jedem Zeichen eine neue hypothetische linke und rechte Kontur mit abgeschrägten Ecken zugeordnet wird, wie in den Figuren 3 bis 6 am Beispiel der Zeichen C und F für mehrere Varianten mit verschiedenen Schrägen gezeigt. Nachstehend sind mit $S_2$ die Serifenschrägen, mit $S_1$ alle anderen Schrägen bezeichnet. Figur 3 zeigt, wie das F und das C mit $S_1 = S_2 = 1$ behandelt werden, Figur 4 die Zeichen mit $S_1 = S_2 = 2$ und Figur 5 die Zeichen mit $S_1 = S_2 = 0.5$. Um einen gleichmäßigen Abstand zwischen vertikalen Balken auch bei unterschiedlich langen Serifen zu erzielen, können die Serifen mit einem groß gewählten Wert für $S_2$ flach abgeschrägt werden, wie in Figur 6 am Beispiel des F mit $S_1$ = 0.5 und $S_2$ = 5.0 gezeigt (alle Zahlenangaben in cotg).

Die Abstände werden erfindungsgemäß zwischen den Zeichen dann so berechnet, daß die Flächen zwischen den hypothetischen Konturen in dem für das jeweilige Paar relevanten Bereich für alle Paare einer Zeichenart gleich groß sind, soweit dies unter Einhaltung der Mindestabstände möglich ist.

Weitere Anforderungen als die oben genannten sind hier nicht zu berücksichtigen, wie z.B. daß senkrechte und runde Zeichenelemente in einem bestimmten schriftspezifischen Rhythmus auftreten sollen.

Ein für alle Schriften einer Schriftenfamilie gleicher Datensatz zur Steuerung der Berechnung der Kerningwerte ist daher ausreichend. Die zu berücksichtigenden schriftspezifischen Daten werden erfindungsgemäß direkt automatisch aus der Schrift abgelesen.

Vorzugsweise wird erfindungsgemäß zur automatischen Berechnung der Zeichenabstände $a_{xy}$ der 1. Bearbeitungsstufe zusätzlich der folgende frei wählbare Datensatz festgeschrieben:

  a) Mindestabstände, die zwischen den Konturen eingehalten werden müssen

  $dM_G$ = *null* Mindestabstand auf den Grundlinien

  $dM$ = *null* Mindestabstand zwischen den Grundlinien.

  b) Festlegung der Größe der gewünschten berücksichtigten Weißfläche zwischen je zwei Zeichen eines Zeichenpaares

  $N$ Normzeichen für Versalien z.B. O

  $N_v$ = *null* Normvorbreite für das Normversalzeichen

  $N_n$ = *null* Normnachbreite für das Normversalzeichen

  $n$ Normzeichen für Minuskeln z.B. o

  $n_v$ = *null* Normvorbreite für das Normminuskelzeichen

  $n_n$ = *null* Normnachbreite für das Normminuskelzeichen

  $S_1$ = 0.9 allgemeingültige Schrägen

  $S_2$ = 5.0 spezielle Schräge für Serifenecken

Die Zeichen werden also in der 1. Bearbeitungsstufe vorzugsweise so eng zugerichtet, daß die Weißfläche zwischen allen Zeichen so groß erscheint, wie zwischen zwei sich berührenden Normzeichen wie zwei o's bzw. O's.

2. Verfahrensstufe: Mittelwertbildung

Diese Stufe ist die wichtigste des Verfahrens. In ihr werden die Zeichenabstände der traditionellen Zurichtung $t_{xy}$ (Zeichenabstand innerhalb des Paares gleich Nachbreite des vorangehenden plus Vorbreite des nachfolgenden Zeichens) mit den in der in der ersten Verfahrensstufe ermittelten Werten $a_{xy}$ mit einem Modifikationsfaktor $m$ gemittelt. Für normale Schriftgrößen bis einschließlich solcher in den Displaybereich von etwa 72 p erhält man gute Ergebnisse mit einer Mittelung von etwa 50% traditioneller und 50% der Hilfstabellenwerte. Für besondere Effekte, vor allem für die Anwendung außergewöhnlich großer und kleiner Schriften kann es zweckmäßig sein, einen von 50% verschiedenen Modifikationsfaktor $m$ z.B. in den Grenzen 30% bis 70% anzuwenden. Insbesondere wenn die gewünschte Schriftgröße bekannt ist, kann $m$ automatisch für die Anwendung optimal gewählt werden.

Durch diese Mittelung werden die schriftspezifischen Eigenschaften der jeweiligen Schrift in einem für alle praktisch vorkommenden Anforderungen ausreichendem Ausmaße berücksichtigt, so daß es nicht mehr notwendig ist, weitere schriftspezifische Daten außer den bereits in der ersten Verfahrensstufe berücksichtigten vorzugeben.

Die in der zweiten Verfahrenstufe ermittelten Paarabstände des Paares $x,y$ seien nachstehend $b_{xy}$ genannt.

Der in der ersten Verfahrensstufe ermittelte Zeichenabstand $a_{xy}$ wird also mit dem traditionellen Abstand $t_{xy}$ des gleichen Paares zum Mittelwert $b_{xy}$ = $m * a_{xy}$ + $(1 - m) * t_{xy}$; $0 < m < 1$ gemittelt.

3. Verfahrensstufe: Laufweitenanpassung

Die in der zweiten Verfahrensstufe ermittelten Paarabstände $b$ bzw. $b_{xy}$ werden normalerweise in einer dritten Verfahrensstufe auf die Laufweite der traditionellen Zurichtung angepaßt, es sei denn, daß in der zweiten Verfahrensstufe eine für die Anforderungen des Anwendungsgebietes ausreichende Laufweite errechnet wurde. Die in dieser Stufe den Werten $b_{xy}$ hinzuzufügenden Korrekturgrößen $D_M$ für Paare von Minuskeln und $D_V$ für alle anderen Paare sind für alle Minuskeln bzw. sonstigen Zeichen konstant und betragen:

für Minuskelpaare $D_M$ = $t_{oo}$ - $b_{oo}$

für alle anderen Paare $D_V$ = $t_{OO}$ - $b_{OO}$

wenn z.B. in der 1. Verfahrensstufe das O als Versalnormzeichen und das o als Minuskelnormzeichen gewählt wurde.

Dabei werden hier die tatsächliche Vor-und Nachbreite des o bzw. O und nicht die in der ersten Verfahrensstufe gewählte Normvor- und Normnachbreite eingesetzt.

Das Ergebnis einer nach diesem Verfahren berechneten long Kerningtabelle wird in Figur 7 veranschaulicht: Das Testwort ist hier nochmals wie in Figur 1 entsprechend der traditionellen Zurichtung und darunter entsprechend der Zurichtung mit einer long Kerningtabelle gesetzt.

**Patentansprüche**

1. Verfahren zur Herstellung einer Long-Kerning-Tabelle für die Zurichtung von Schriften, **dadurch gekennzeichnet, daß**
in einer ersten Verfahrensstufe für jedes Paar von Zeichen x und Y ein Paarabstand $a_{xy}$ ausschließlich nach den Kriterien ermittelt wird, daß vorgegebene Mindestabstände zweier aufeinanderfolgender Zeichen x, y eingehalten werden, die gegebenenfalls auf den Grundlinien kleiner sein dürfen als zwischen den Grundlinien, und daß die Weißfläche zwischen den Zeichenpaaren jeweils für die Zeichen einer Zeichenart optisch gleich groß erscheint, wobei für verschiedene Zeichenarten wie Versalien, Minuskeln und Sonderzeichen verschieden groß erscheinende Zeichenabstände in Betracht kommen,
in einer zweiten Verfahrensstufe aus den so ermittelten Paarabständen $a_{xy}$ und den (sich als Summe von Nachbreite des vorangehenden Zeichens x und Vorbreite des nachfolgenden Zeichens y ergebenden) traditionellen Werten $t_{xy}$ mit einem Modifikationsfaktor $0 < m < 1$ gemittelte Paarabstände $b_{xy}$ gemäß $b_{xy} = m \cdot a_{xy} + (1-m) \cdot t_{xy}$ ermittelt werden.

2. Verfahren nach Anspruch 1 dad. gek., daß in der ersten Verfahrensstufe alle erforderlichen schriftspezifischen Daten wie Versalhöhe, Minuskelhöhe, Unterlänge, Serifenhöhe und Kursivwinkel für alle Schriften automatisch aus den Schriftdaten ausgelesen bzw. berechnet werden.

3. Verfahren nach den Ansprüchen 1 und 2 dad. gek., daß in der ersten Verfahrensstufe als Normzeichen für Versalien O und für Minuskeln o gewählt wird.

4. Verfahren nach den Ansprüchen 1 bis 3 dad. gek., daß in der ersten Verfahrensstufe den Normzeichen eine Normvor- und Normnachbreite null zugeordnet wird.

5. Verfahren nach den Ansprüchen 1 bis 4 dad. gek., daß in der ersten Verfahrensstufe zur Berechnung der weißen Fläche zwischen den Konturen hypothetische linke und rechte Zeichenkonturen berechnet werden.

6. Verfahren nach den Ansprüchen 1 bis 5 dad. gek., daß in der ersten Verfahrensstufe die hypothetischen Konturen durch Abschrägen der Ecken berechnet werden, wobei die Neigung der Schrägen vorgegeben wird.

7. Verfahren nach den Ansprüchen 1 bis 6 dad. gek., daß in der ersten Verfahrensstufe Serifenecken besonders abgeschrägt werden.

8. Verfahren nach den Ansprüchen 1 bis 7 dad. gek., daß in der ersten Verfahrensstufe vorzugsweise als allgemeingültige Schräge $S_1$ = 0.9 und als für die Serifen gültige $S_2$ = 5.0 eingesetzt wird.

9. Verfahren nach den Ansprüchen 1 bis 8 dad. gek., daß in der ersten Verfahrensstufe vorzugsweise der Mindestabstand auf den Grundlinien $dM_G$ = *null* und zwischen den Grundlinien $dM$ = *null* vorgegeben wird.

10. Verfahren nach den Ansprüchen 1 bis 9 dad. gek., daß in der ersten Verfahrensstufe die Art der Zeichen für alle Schriften einer Schriftenfamilie fest vorgegeben wird.

11. Verfahren nach den Ansprüchen 1 bis 10 dad. gek., daß in der zweiten Verfahrensstufe der Modifikationsfaktor $0.3 <= m <= 0.7$, vorzugsweise $m$ = 0.5 verwendet wird.

12. Verfahren nach den Ansprüchen 1 bis 11 dad. gek. daß der Modifikationsfaktor $m$ automatisch an die Schriftgröße angepaßt wird.

13. Verfahren nach den Ansprüchen 1 bis 12, **dadurch gekennzeichnet, daß,** wenn die in der zweiten Verfahrensstufe bestimmten gemittelten Paarabstände $b_{xy}$ an die traditionelle Laufweite angepaßt werden sollen, in einer dritten Verfahrensstufe den gemittelten Paarabständen $b_{xy}$ eine Korrekturgröße D hinzugefügt wird, die für alle Paare von Minuskeln gleich der Differenz $t_{nn} - b_{nn}$ für das gewählte Minuskelnormzeichen n ist, z.B. $D = t_{oo} - b_{oo}$, wenn die Minuskel o als Minuskelnormzeichen gewählt ist, und für alle anderen Paare gleich der Differenz $t_{NN} - b_{NN}$ für das Versalnormzeichen N, z.B. $D = t_{oo} - b_{oo}$, wenn der Versal O als Versalnormzeichen gewählt ist.

**Claims**

1. A method for establishing a long Kerning table for typeface spacing, characterized in that
in a first step of the method, for each pair of characters x and y, a pair interval $a_{xy}$ is established, exclusively according to the criteria that the pre-set minimum intervals for two consecutive characters x, y are observed, which may be smaller on the base lines than between the base lines, and that the white area between the character pairs optically appears the same size for characters of a given character type, wherein for different types of characters such as upper case, lower case and special characters, character intervals appearing in different sizes come into consideration,

in a second step of the method, from the thus established character pair intervals $a_{xy}$ and the traditional values $t_{xy}$ (resulting from the sum of the preceding character x's right side bearing and the subsequent character y's left side bearing) calculated mean character pair intervals $b_{xy}$ are established according to the formula $b_{xy} = m * a_{xy} + (1 - m) * t_{xy}$ using a modification factor $0 < m < 1$.

2. Method according to claim 1 wherein, in the first step of the method all the font specific data required, such as upper case height, lower case height, descender length, serif height and slant angle for all fonts is automatically read or calculated from the font's data.

3. Method according to claims 1 and 2 wherein, in the first step of the method, O is selected as the standard character for upper case and o is selected for lower case.

4. Method according to claims 1 to 3 wherein, in the first step of the method the standard character will be assigned a standard left and right side bearing of zero.

5. Method according to claims 1 to 4 wherein, in the first step of the method hypothetical left and right character contours will be calculated for calculating the white areas between the contours.

6. Method according to claims 1 to 5 wherein, in the first step of the method the hypothetical contours are calculated by cutting off the corners, whereby the slope of the oblique is pre-set.

7. Method according to claims 1 to 6 wherein, in the first step of the method serif corners are especially cut off.

8. Method according to claims 1 to 7 wherein, in the first step of the method, by preference the generally valid oblique S1 = 0.9 is used, and for the serifs a valid S2 = 5.0.

9. Method according to claims 1 to 8 wherein, in the first step of the method, by preference the minimum interval on the base lines is pre-set as $dM_G$ = null, and between the base lines $dM_G$ = null.

10. Method according to claims 1 to 9 wherein, in the first step of the method the character type is permanently pre-set for all fonts in a font family.

11. Method according to claims 1 to 10 wherein, in the second step of the method the modification factor $0.3 <= m <= 0.7$, by preference m = 0.5 will be applied.

12. Method according to claims 1 to 11 wherein the modification factor m is automatically adjusted to the font size.

13. Method according to claims 1 to 12 wherein, if in the second step of the method particular calculated mean character pair intervals $b_{xy}$ should be adjusted to the traditional running width, then in the third stage of the method the calculated mean character pair intervals $b_{xy}$ will have a correction value D appended to them, that for all pairs of lower case letters is equal to the difference $t_{nn} - b_{nn}$, if the lower case letter n is selected as a standard lower case letter, or $t_{nn} - b_{nn}$, if o is standard, and for all other character pairs it is equal to the difference $t_{NN} - b_{NN}$ for the standard upper case character N, e.g. $D = t_{oo} - b_{oo}$ if the upper case character O is selected as the standard upper case character.

**Revendications**

1. Procédé pour établir un tableau de crénage long servant à l'interlettrage de polices de caractères, caractérisé par

l'évaluation dans une première étape d'un écart $a_{xy}$ pour chaque paire de signes x et y en prenant en considération uniquement les critères consistant à respecter des écarts minimaux donnés pour deux signes x et y consécutifs, eventuellement moins importants sur la ligne de base qu'à d'autres endroits, et un espace blanc entre les paires de signes d'une apparence optique égale, sachant que pour les différents types de signes comme majuscules, minuscules et signes spéciaux, les espaces entre les signes peuvent différer en taille apparente,

l'évaluation dans une deuxième étape d'un écart pondéré $b_{xy}$ à partir des écarts $a_{xy}$ ainsi calculés et des valeurs traditionnelles $t_{xy}$ calculées à partir de la somme de l'approche droite du signe x précédant et de l'approche y droite du signe x précedant et de l'approche y droit du signe suivant avec un facteur de modification $0 < m < 1$ selon $b_{xy} = m \cdot a_{xy} + (1-m) \cdot t_{xy}$.

2. Procédé selon la demande n° 1, caractérisé par la lecture ou le calcul automatique dans la première étape de toutes les données nécessaires et spécifiques à la polices de caractères, comme la hauteur capitale, la hauteur minuscule, les descendantes, la hauteur des empattements et l'angle italique.

3. Procédé selon les revendications n° 1 et 2, caractérisé par le choix dans la première étape du signe de référence O pour les majuscules et o pour les minuscules.

4. Procédé selon les revendications n° 1 à 3, caractérisé par l'attribution dans la première étape aux signes de référence d'une approche gauche et droite de zéro.

5. Procédé selon les revendications n° 1 à 4, caractérisé par le calcul dans la première étape de contours hypothétiques à gauche et à droite des signes pour le calcul de l'espace blanc entre les contours.

6. Procédé selon les revendications n° 1 à 5, caractérise par le calcul dans la première étape des contours hypothétiques par biseautage des coins à un angle donné.

7. Procédé selon les revendications n° 1 à 6, caractérisé par un biseautage spécial des coins d'empattements dans la première étape.

8. Procédé selon les revendications n° 1 à 7, caractérisé par un biseautage général de préférence de $S_1 = 0,9$ et de $S_2 = 5,0$ pour les empattements dans la première étape.

9. Procédé selon les revendications n° 1 à 8, caractérisé par un écart minimal de préférence de $dM_G = $ zéro sur les lignes de base et de $dM = $ zéro à d'autres endroits dans la première étape.

10. Procédé selon les revendications n° 1 à 9, caractérisé par une détermination des types de signes pour toutes les polices de caractères d'une famille dans la première étape.

11. Procédé selon les revendications n° 1 à 10, caractérisé par l'utilisation de préférence d'une valeur de $m = 0,5$ pour le facteur de modification $0,3 <= m <= 0,5$ dans la deuxième étape.

12. Procédé selon les revendications n° 1 à 11, caractérisé par une adaption automatique du facteur de modification m à la taille de la police de caractères.

13. Procédé selon les revendications n° 1 à 12, caractérisé par l'ajout d'une valeur de correction D aux écarts pondérés $b_{xy}$, égale à la différence $t_{nn} - b_{nn}$ pur toutes les paires de minuscules, par exemple $D = t_{oo} - b_{oo}$ si la minuscule o a été choisie comme signe de référence, et égale à la différence $t_{NN} - b_{NN}$ pour le signe de référence N, par exemple $D = t_{oo} - b_{oo}$, si la majuscule O a été choisie comme signe de référence, dans une troisième étape et si les écarts pondérés entre paires issus de la deuxième étape doivent être adaptés à la longueur de texte traditionnelle.

Fig. 1 **Television**

Fig. 2 **VH HH**

Fig. 3

Fig. 4

Fig. 5

Fig. 6

Fig. 7

Television

traditional

Television

kerning